# EUROPEAN PATENT SPECIFICATION

(11) **EP 1 657 126 B1**
(45) Date of publication and mention of the grant of the patent: **29.07.2015**
(21) Application number: 06100534.4
(22) Date of filing: 09.03.2000
(51) Int. Cl.: B60R 21/20

(54) **Air bag deployment apparatus for vehicle seat**
Luftsack-Entfaltungsvorrichtung für Fahrzeugsitz
Dispositif de déploiement de coussin gonflable pour siège de véhicule

(30) Priority: 10.03.1999 US 266098
(43) Date of publication of application: 17.05.2006
(62) Divisional of application: 00105020.2
(73) Proprietor: TOYOTA JIDOSHA KABUSHIKI KAISHA, Toyota-shi, Aichi-ken, 471-8571 (JP)
(72) Inventor: Kato, Takeaki, Toyota-shi, Aichi-ken 471-8571 (JP); Suzuki, Koichi, Toyota-shi, Aichi-ken 471-8571 (JP); Ghalambor, Haleh, Toyota-shi, Aichi-ken 471-8571 (JP); Mikutsu, Satoshi, Ann Arbor, MI 48105 (US)
(74) Representative: TBK

(56) References cited:
- EP-A- 0 768 215
- EP-A- 0 788 940
- WO-A-98/38067
- DE-A- 19 746 387
- JP-A- 10 053 091
- US-A- 5 845 932
- PATENT ABSTRACTS OF JAPAN vol. 1998, no. 11, 30 September 1998 (1998-09-30) -& JP 10 157550 A (IKEDA BUSSAN CO LTD), 16 June 1998 (1998-06-16)

## Description

### BACKGROUND OF THE INVENTION

### 1. Field of the Invention

The present invention relates to a vehicle seat which comprises an air bag deployment apparatus with a seat back.

### 2. Description of the Related Art

In order to provide passengers of vehicles with protection from side impact, it is known to utilize air bags which are deployed from the vehicle seat back to extend between a passenger and a vehicle side wall or a door. In these air bag deployment apparatuses, an air bag module is mounted to the frame of the vehicle seat. A cushion extends over the air bag module and the frame. A trim cover in which a frangible seam line is formed extends over the cushion. Upon activation, the air bag ruptures the cushion and the frangible seam line in the trim cover to extend between the passenger and the vehicle side wall or the door from the seat back. Various methods have been used to ensure that the bag deploys properly. These include storing the bag within a box which has a frangible end to direct the direction of deployment, as disclosed in U.S. Patent No. 5, 700, 028.

It is also known, as disclosed in Japanese Patent Application Laid-Open No. 8-258660, to direct the deployment of the air bag to a seam in the trim cover by means of a pair of flexible straps spaced apart from each other. One end of each strap is fixed to the frame and the other end is sewn to one side of a pair of trim covers sewn up along the seam line. The straps follow the inside contour of the cushions. When the inflator is activated, the air bag is inflated by the gas emitted from the inflator and deployed between two straps which direct the bag towards the seam in the trim covers.

However, since the box harder than the cushions is disposed inside the seat back in the air bag deployment apparatus disclosed in the aforementioned U.S. Patent No. 5, 700, 028, the box hampers the cushioning performance of the seat back. This alters the ergonomics and comfort of the seat back.

In the air bag deployment apparatus disclosed in Japanese Patent Application Laid-Open No. HEI 8-258660, the straps follow the contour of the foam so that the deployment of the air bag presses the cushions of the seat back outwardly. Thus, during deployment of the air bag, the air bag presses the cushion and then ruptures the seam line. This results in a loss of the energy for deployment of the air bag because part of it is used to press the cushion.

On the other hand, Japanese Patent Application Laid-Open No. HEI 10-157550, which is considered as the starting point of the present invention, discloses an air bag system for a seat having a strap extending along the inside of a trim cover from a seam line and coupled to a rear portion of a frame. In this air bag system, the strap is disposed to encompass the side and rear portions of the air bag module. In order to ensure the cushioning performance of side and rear surfaces of the seat disclosed in this publication, it is considered to also provide the side and rear surfaces of the seat with cushions. In this case, it is considered that the strap extends between the cushion on the side portion of the seat and the trim cover from the seam line and then rearwardly of the cushion on the rear portion of the seat and is coupled to the frame. That is, the strap encompasses the cushions on the rear and side portions of the seat while it extends to the seam line from the frame. In such a construction, upon deployment of the air bag, the strap receives a deployment pressure of the air bag and is pulled forwardly. At this moment the strap compresses the cushion on the rear portion of the seat forwardly. The compression of the cushion brings about a loss in energy for deployment of the air bag. Also, since the strap is allowed to be displaced forwardly by a deformed amount of the cushion, the seam line may not be ruptured properly. If the cushion on the rear portion of the seat is thickened to enhance the cushioning performance of the rear surface of the seat or to arrange the air bag module in front of the seat back, the aforementioned problem becomes acute. Accordingly, it has been required to take a measure such as the boosting of the pressure of inflator gas for the purpose of rupturing the seam line with greater reliability.

### SUMMARY OF THE INVENTION

It is the object of the present invention to provide an air bag deployment apparatus for side impact which enables a stable deployment of the side air bag and improves the applicability of the air bag deployment apparatus.

The object of the invention is achieved by an air bag deployment apparatus according to claim 1.

The present invention further provides an air bag deployment apparatus which demonstrates high stability in the direction of deployment and can maintain the ergonomics of a conventional seat.

According to the invention, the cushion has a rear portion extending rearwardly of the air bag module with a part of the rear portion being sandwiched between the reaction surface and the strap, and the sandwiched part of the rear portion may have a substantially uniform thickness from top to bottom of the strap.

In this construction, the rear portion of the cushion sandwiched between the strap and the reaction surface has a substantially uniform thickness from top to bottom of the strap. Therefore, the deployment pressure of the air bag is substantially uniformly transmitted to the rear portion of the cushion sandwiched between the strap and the reaction surface. This provides substantially uniform compression of the part of the cushion contacting the reaction surface during deployment of the air bag, whereby the deformed amount of that part becomes substantially uniform from top to bottom of the strap and the strap is inhibited from being twisted. Therefore, the magnitude and direction of the force transmitted to the seam line from the strap can be stabilized and the seam line can be ruptured with certainty. This provides stable deployment of the air bag in a predetermined direction. Moreover, since the thickness of the cushion can be adjusted by modifying the shape of the support member, even if the air bag module is disposed further forwardly of the seat, the air bag can be deployed properly. In addition, application to vehicles of different types is made possible through a slight modification of the shape of the support member, the applicability of the air bag deployment apparatus improves.

According to the present invention, since the strap is supported on the reaction surface of the support member, the amount of forward displacement of the strap is limited. Accordingly, the seam line to which the strap is coupled is inhibited from being displaced forwardly due to deformation of the cushion, which makes it possible to effectively transmit the deployment pressure of the air bag to the seam line and rupture the seam line with certainty. This results in stable deployment of the air bag and reduction in the loss of energy for deployment caused by excessive compression of the cushion. Thus, the gas pressure required for deployment of the air bag is significantly reduced.

The air bag module may be mounted to the frame through the support member.

In this construction, the aforementioned effects can be achieved without substantially increasing the number of parts in comparison with the conventional structure.

The support member may have an end portion extending towards a front portion of the seat from the reaction surface.

At least a part of the strap may extend between the trim cover and the cushion.

The support member may be a protector for protecting the air bag module from an impacting object outside a vehicle.

### BRIEF DESCRIPTION OF THE DRAWINGS

The foregoing and further objects and advantages of the present invention will become apparent from the following description of preferred embodiments with reference to the accompanying drawings, wherein:
Fig. 1 is a perspective view schematically showing a vehicle seat fitted with an air bag deployment apparatus according to a first comparative example for better understanding the scope of the invention;
Fig. 2 is a partial sectional view of the vehicle seat fitted with the air bag deployment apparatus according to the first comparative example for better understanding the scope of the invention, in a state prior to deployment of the air bag;
Fig. 3 is a partial sectional view of the vehicle seat taken along a line 3-3 shown in Fig. 2;
Fig. 4 is a partial sectional view of the vehicle seat fitted with the air bag deployment apparatus according to the first comparative example for better understanding the scope of the invention, in a state of deployment of the air bag;
Fig. 5 is a partial sectional view of a vehicle seat fitted with an air bag deployment apparatus according to an embodiment of the present invention, in a state prior to deployment of the air bag;
Fig. 6 is a partial sectional view of the vehicle seat taken along a line 6-6 shown in Fig. 5;
Fig. 7 is a partial sectional view of the vehicle seat taken along a line 7-7 shown in Fig. 5;
Fig. 8 is a perspective view of the air bag deployment apparatus according to the embodiment of the present invention;
Fig. 9 is a perspective view of a support bracket in the embodiment of the present invention;
Fig. 10 is a partial sectional view of a vehicle seat fitted with an air bag deployment apparatus according to a second comparative example for better understanding the scope of the invention;
Fig. 11 is a perspective view of a support bracket in the second comparative example for better understanding the scope of the invention;
Fig. 12 is a top view of the support bracket in the second comparative example for better understanding the scope of the invention;
Fig. 13 is a top view of a modification example of the support bracket in the second comparative example for better understanding the scope of the invention; and
Fig. 14 is a top view of another modification example of the support bracket in the second comparative example for better understanding the scope of the invention.

### DETAILED DESCRIPTION OF PREFERRED EMBODIMENTS

An embodiment and comparative examples for better understanding the scope of the present invention will be described hereinafter with reference to the accompanying drawings. In the accompanying drawings, arrows FR, IN and UP denote directions to front, central and upper parts of a vehicle respectively.

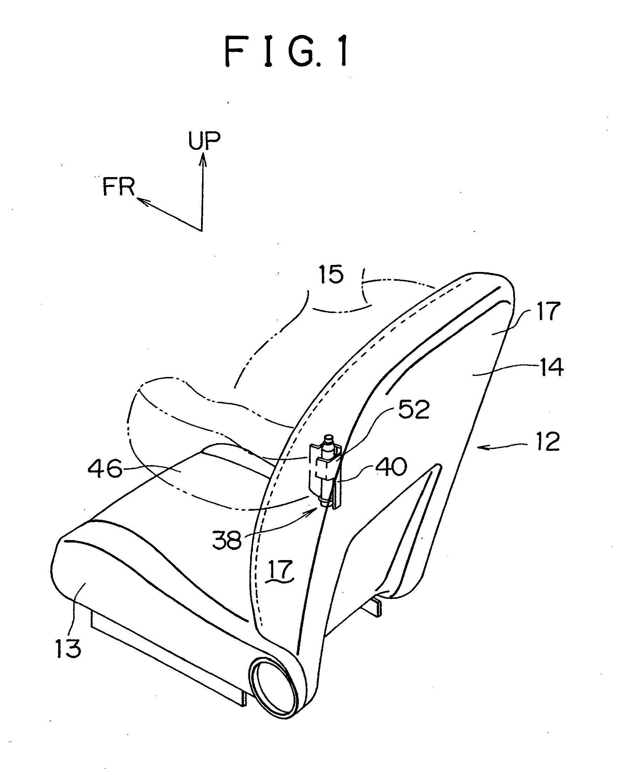

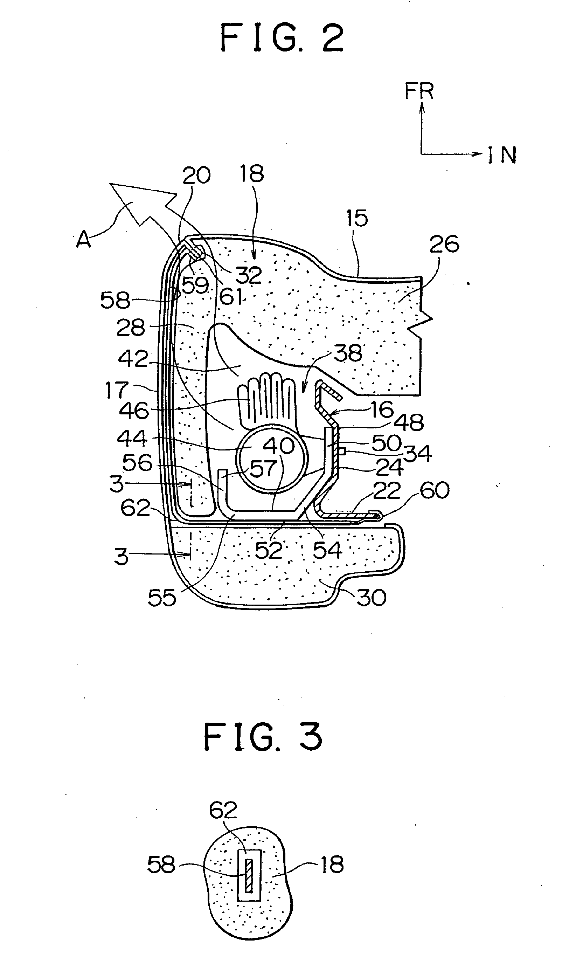

Figs. 1 through 4 show an air bag deployment apparatus according to a first comparative example for better understanding the scope of the invention. Fig. 1 shows a seat 12 composed of a seat cushion 13 and a seat back 14. The seat back 14 has two side surfaces 17 and a front surface 15 extending between the side surfaces 17. The front surface 15 is formed to support a passenger. As shown in Fig. 2, the seat back 14 has a cushion 18, a trim cover 20 covering an outer periphery of the cushion 18, and a generally U-shaped frame 16 supporting the cushion 18 and the trim cover 20. The frame 16 can be formed of a rigid material such as metal or carbon fiber composite material. The frame 16 has an intermediate portion 24 on a horizontal cross-section and a rear flange 22 extending from the intermediate portion 24. The cushion 18 has a generally C-shaped cross-section with two side portions 28 (only one of them is shown in Fig. 2), a front portion 26 coupling front ends of the side portions 28 to each other, and rear portions 30 extending from rear ends of the respective side portions 28 towards the center of the seat. The rear portions 30 of the cushion 18 serve to ensure cushioning properties when the seat 12 is touched from behind. The cushion 18 can be formed of a known foam material. The cushion 18 encompasses the frame 16 so that the frame 16 is sandwiched between the front portion 26 and the rear portions 30 of the cushion 18.

As shown in Fig. 2, the outer periphery of the cushion 18 is covered with the trim cover 20 which is formed from fabric or leather. The trim cover 20 has a vertically extending frangible seam line 32. The seam line 32 extends vertically along the front surface 15 of the seat back 14 in the neighborhood of a corner portion formed by the front surface 15 and the side surface 17. The seam line 32 has sufficient length to permit deployment of an air bag 46. However, the seam line 32 may be replaced with a seam line extending along the full height of the seat.

An air bag module 38 and a support bracket 40 are disposed in a cavity 42 formed between the frame 16 and the cushion 18 and fixed by studs 34 to the intermediate portion 24 of the frame 16. The air bag module 38 has the air bag 46 and an inflator 44. The inflator 44 is in the shape of an elongated cylinder and has ports (not shown) through which the inflator gas is discharged to inflate the air bag 46. The inflator 44 contains chemicals for generating an inflator gas for discharge at the time of deployment of the air bag. The air bag 46 is made of any conventional fabric material which is suitable for air bag construction. The air bag 46 is folded in the cavity 42. To elaborate in detail, the air bag 46 is coupled in the cavity 42 to the front surface of the inflator 44, that is, the surface closer to the seam line 32. In this comparative example, the air bag module 38, the inflator 44 and the air bag 46 may be of a conventional type.

As shown in Figs. 1 and 2, the support bracket 40 has an arm 57 extending generally outwardly towards the side portions 28 of the cushion 18 from a mounting portion 50 for the frame 16. The mounting portion 50 of the support bracket 40 may be of any shape necessary to conform to the surface of the frame 16 and support the arm 57 extending outwardly and laterally from the frame 16 to the vicinity of the side surface 17 of the seat back 14. The mounting portion 50 has apertures (not shown) into which the studs 34 are inserted. The arm 57 has an inner panel portion 54, an intermediate panel portion 55, and an end panel portion 56. The inner panel portion 54 inclines rearwardly and outwardly from the mounting portion 50 and conforms with an angled portion of the frame 16. The intermediate panel portion 55 extends laterally from a rear end of the inner panel portion 54 towards the side surface 17 of the seat back. The end panel portion 56 is bent approximately 90 DEG from the intermediate panel portion 55 to be parallel to the side surface 17 of the seat back, and extends forwardly. The rear surface of the intermediate panel portion 55 forms a reaction surface 52 for supporting a strap 58. The support bracket 40 can be formed in a known manner from a rigid material such as metal.

As shown in Figs. 1 and 2, a front end 59 of the strap 58 is sewn on the inner surface of the trim cover 20 near an edge 61 forming the seam line 32 of the trim cover 20. The strap 58 extends to a U-shaped clip 60 which is mounted to the rear end of the strap 58. The clip 60 engages the rear flange 22 of the frame 16. The strap 58 may be formed of any suitable flexible material having a low modulus of elasticity, such as the material from which seat belts are formed. In this comparative example, the strap 58 is approximately 65mm in width, approximately 230mm in length and approximately 0.2 to 0.3mm in thickness. As shown in Figs. 2 and 3, the strap 58 extends from the frame 16 along the reaction surface 52 of the intermediate panel portion 55 of the support bracket 40 and through an aperture 62 in the cushion 18. The aperture 62 extends laterally through the side portion 28 of the cushion 18. The aperture 62 is approximately 20mm in width in the fore-to-aft direction and 100mm in height to freely accept the strap 58 therethrough. After exiting the aperture 62 the strap 58 turns approximately 90° to extend between the trim cover 20 and the side portion 28 of the cushion 18 to the seam line 32.

It will be described hereinafter how the first comparative example for better understanding the scope of the invention functions.

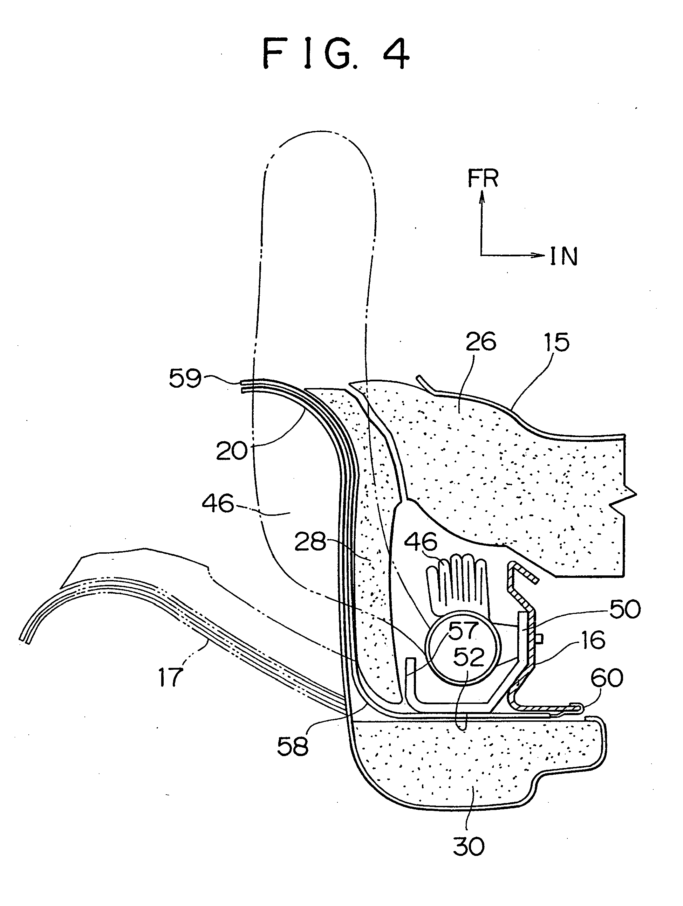

As shown in Fig. 2, the air bag 46 deploys generally in the direction of the seam line 32 as shown by the arrow "A". As is apparent from Fig. 4, the strap 58 receives a deployment pressure from the air bag 46 and ruptures the seam line 32 during deployment of the air bag 46. More specifically, if the inflator gas emits from the inflator 44, the air bag 46 is urged to expand laterally and forwardly. At this moment, the side portions 28 and the central portion 26 of the cushion 18 are pressed due to the deployment pressure of the air bag 46. Because the outer periphery of the cushion 18 is encompassed by the strap 58 which has a low modulus of elasticity and thus is unlikely to be elongated, the deployment pressure of the air bag 46 acting on the side portions 28 is transmitted to the seam line 32 by the strap 58. Therefore the seam line 32 can be ruptured with certainty at the initial stage of deployment of the air bag 46. In response to the rupture of the seam line 32, the cushion 18 is ruptured upon receipt of the deployment pressure of the air bag 46. The air bag 46 deploys outwardly through the ruptured location of the cushion 18. At this moment, in response to the deployment pressure of the air bag 46, a small amount of the cushion 18 adjacent to the end panel portion 56 is compressed against the end panel portion 56 of the support bracket 40. However, since the rear portion of the strap 58 is supported by the reaction surface 52 of the support bracket 40, the amount of forward displacement of the strap 58 is limited. Therefore, the seam line 32 to which the strap 58 is coupled is inhibited from being displaced forwardly due to deformation of the cushion 18, and it is possible to effectively transmit the deployment pressure of the air bag 46 to the seam line 32 and rupture it with certainty. This results in stable deployment of the air bag 46 and a reduction in the loss of energy for deployment of the air bag 46 caused by excessive compression of the cushion 18. Thus the gas pressure required for the inflator 44 to deploy the air bag can significantly be reduced. In other words, it becomes possible to use the inflator 44 with a low output.

In this comparative example, since the strap 58 penetrates the aperture 62, the strap 58 can be extended between the side portions 28 of the cushion 18 and the trim cover 20 at the shortest distance from the reaction surface 52 of the support bracket 40, and the strap 58 can be of a relatively short length. If the strap 58 is inserted into the aperture 62 through a slit (not shown) formed in the aperture 62 to communicate with the outer surface of the cushion 18, the mounting operation of the strap 58 is facilitated and the operability in assembling the seat improves.

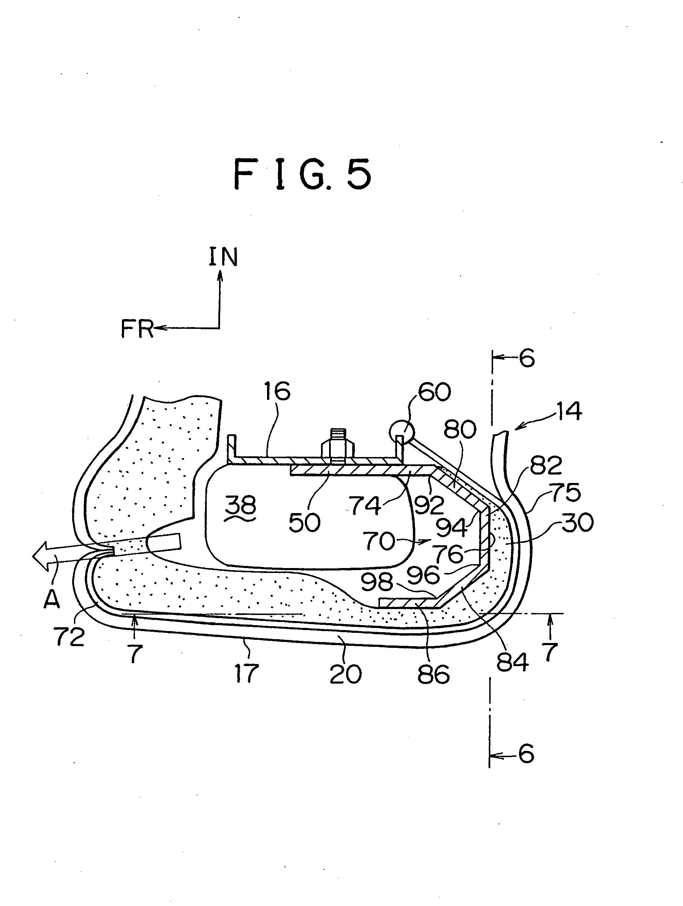

An air bag deployment apparatus according to an embodiment of the present invention will be described hereinafter with reference to Figs. 5 through 9.

The embodiment is different from the first comparative example in that it includes a modified support bracket 70 and a strap 72 which loops around the cushion 18. In addition, the embodiment dispenses with the aperture 62 of the cushion 18 as mentioned in the description of the first comparative example. As shown in Fig. 5, the support bracket 70 has an arm 74 with a reaction surface 76 which is formed to be parallel to the path of the strap 72 as it travels in a path around the cushion 18. The strap 72 extends from the frame 16 rearwardly to the inside of the trim cover 20 at a rear surface 75 of the seat back 14 and then passes through the outside of the cushion 18 and the inside of the trim cover 20. The strap 72 then extends along the inside of the trim cover 20 to the seam line 32.

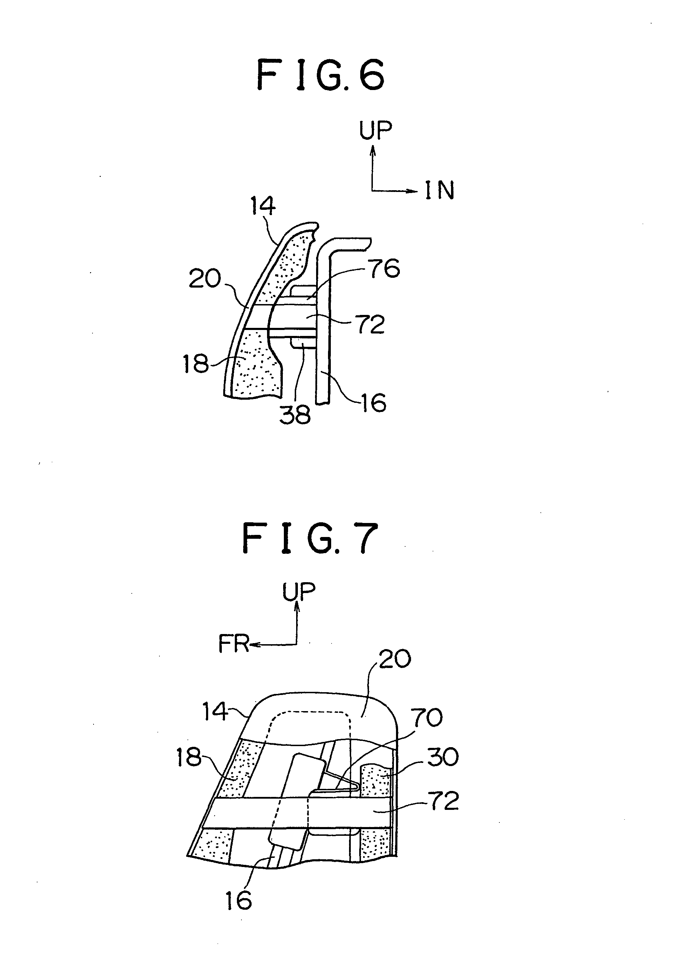

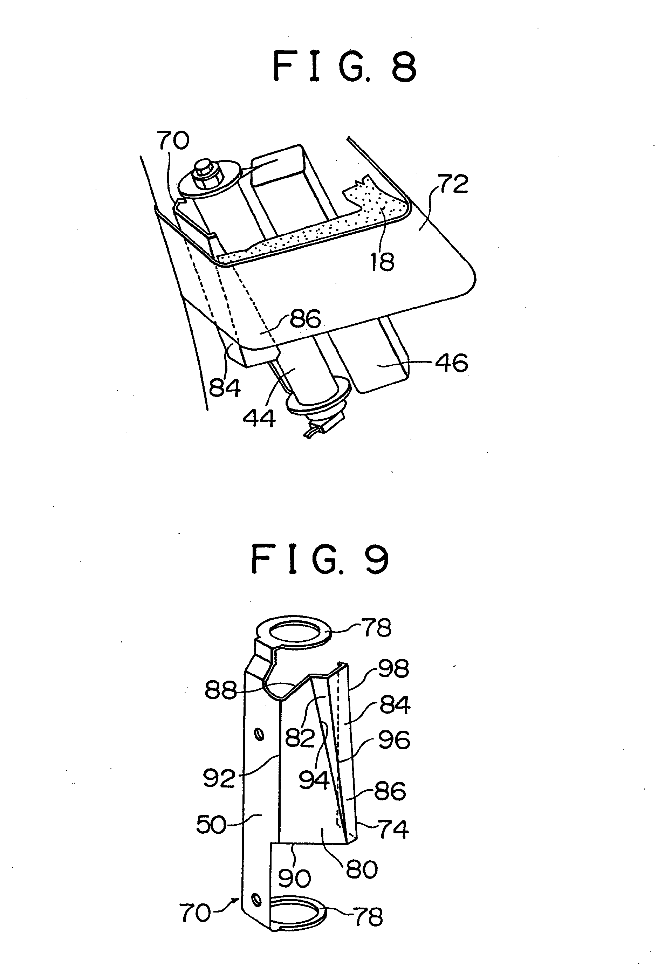

As shown in Figs. 7 and 9, the support bracket 70 includes the mounting portion 50 with a pair of upper and lower rings 78 for holding the inflator (not shown) and the arm 74. As for the contour of the seat back 14, since the front surface may be angled with respect to the back surface as shown in Fig. 7 and the side surface may be sloped laterally and upwardly towards the center as shown in Fig. 6, the arm 74 has four panel portions which are formed to be generally parallel to the path of the strap 72. Figs. 6 and 7 are sectional views which are taken along lines 6-6 and 7-7 shown in Fig. 5 respectively. To furnish a clear illustration, these sectional views additionally show the strap 72. The inflator (the air bag module) is secured to be generally parallel to the front surface of the seat. That is, the arm 74 has an inner panel portion 80, a rear panel portion 82, a corner panel portion 84 and an end panel portion 86 as shown in Fig. 9.

The inner panel portion 80 extends from a top edge 88 to a bottom edge 90 of the arm 74 and between a first bend line 92 and a second bend line 94. The inner panel portion 80 extends at an angle towards the rear surface 75 of the seat back 14 from the first bend line 92 of the mounting portion 50 as shown in Fig. 5. The rear panel portion 82 is wedge-shaped and defined by the second bend line 94 and a third bend line 96. The rear panel portion 82 extends generally parallel to the rear surface 75 of the seat back. The corner panel portion 84 is wedge-shaped and defined by the third bend line 96 and a fourth bend line 98.

As shown in Figs. 7 and 9, the corner panel portion 84 is wider at the top edge 88 than at the lower edge 90 and angles to be generally parallel to the contour of the seat back 14 as it turns from the rear portion along the inner surface of the trim cover 20, so that the upper edge 88 is located closer to the inflator 44 than the bottom edge 90. The end panel portion 86 has a wedge-shape which is wider at the bottom edge 90 than at the top edge 88 and angles to be generally parallel to the side surface 17 of the seat back 14 so that the top edge 88 is located closer to the inflator 44 than the bottom edge 90. Thus, the arm 74 is smaller at the top edge 88 than at the bottom edge 90.

As shown in Fig. 5, the reaction surface 76 is formed so that the thickness of the rear portion 30 of the cushion 18 sandwiched between the strap 72 and the reaction surface 76 is substantially constant from top to bottom of the strap 72. In Fig. 8, the rear portion 30 of the cushion 18 shown in Fig. 5 is omitted. Therefore in Fig. 8, there is a gap formed between the corner panel portion 84 of the arm 74 and the strap 72. The strap 72 substantially uniformly supports the inner surface of the rear portion 30 of the cushion 18 on the arm 74 from top to bottom of the strap 72. The uniform contact relationship between the arm 74 and the inner surface of the rear portion 30 of the cushion 18 serves to substantially uniformly transmit the deployment pressure of the air bag 46 to the rear portion 30 of the cushion 18 sandwiched between the strap 72 and the reaction surface 76. This ensures that the part of the rear portion 30 of the cushion 18 contacting the arm 74 is substantially uniformly pressed during deployment of the air bag. Thus, the rear portion of the cushion is deformed substantially uniformly from top to bottom of the strap 72, which inhibits the strap 72 from being twisted. Therefore, the magnitude and direction of the force transmitted to the seam line 32 from the strap 72 can be stabilized and the seam line 32 can be ruptured with certainty. This provides stable deployment of the air bag 46 in a predetermined direction.

In this embodiment, since the shape of the support bracket 70 is modified to adjust the thickness of the cushion 18, the air bag 46 can be deployed appropriately even if the air bag module 38 is disposed further forwardly of the seat back 14. Because application to vehicles of different types is made possible through a slight modification of the shape of the support bracket 70, the applicability of the air bag deployment apparatus improves.

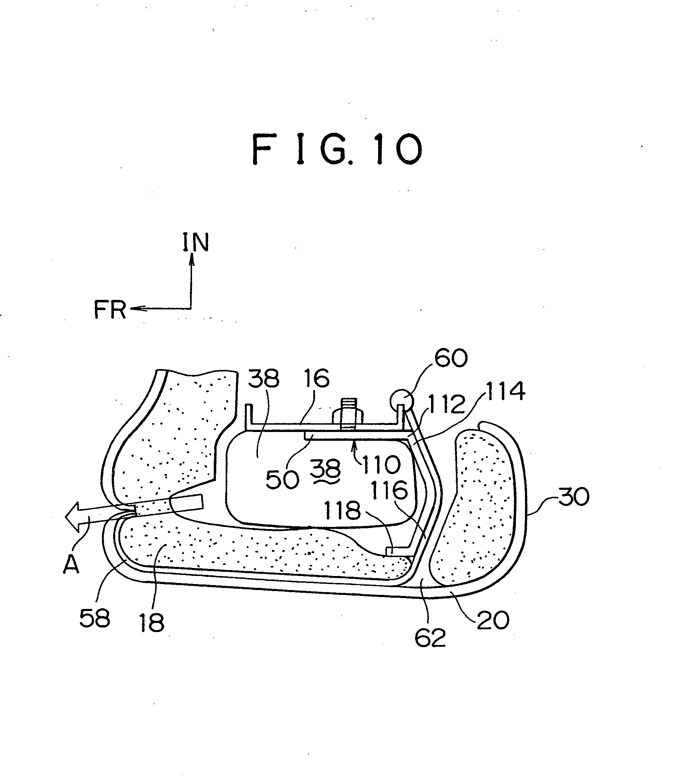

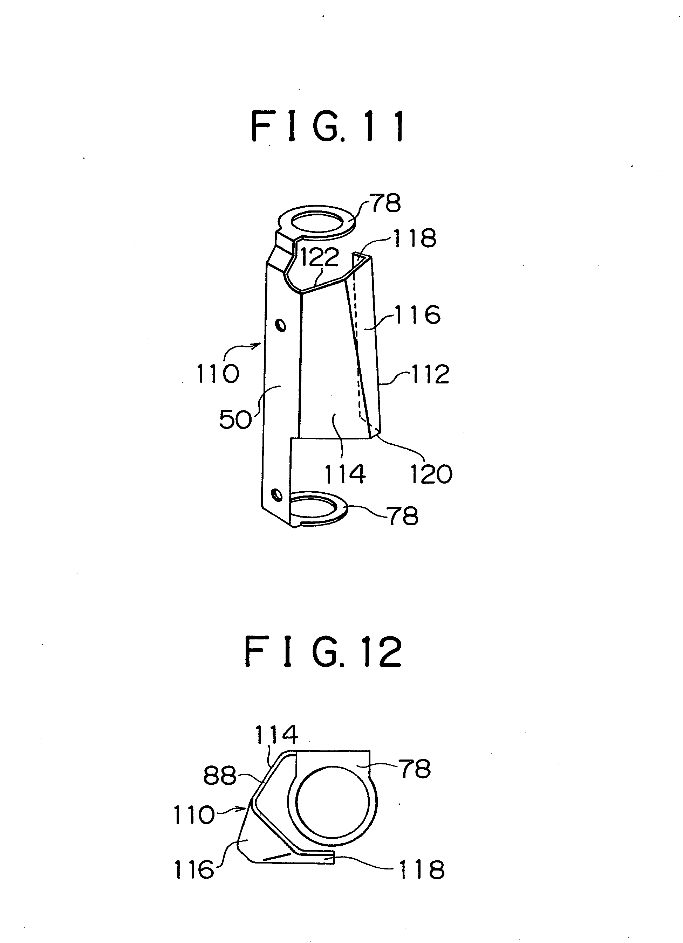

An air bag deployment apparatus according to a second comparative example for better understanding the scope of the invention will be described hereinafter with reference to Figs. 10 through 14. This apparatus utilizes a support bracket 110 similar to that of the first comparative example with the strap 58 which extends through the aperture 62 in the cushion 18. In the second comparative example, the inflator 44 (the air bag module 38) is mounted to angle with respect to the rear surface of the seat in a direction generally parallel to the front surface of the seat, as is the case with the embodiment shown in Fig. 7. As shown in Figs. 11 and 12, the support bracket 110 may be stamped in one piece with a mounting portion 50 and an arm 112. The arm 112 has an inner panel portion 114, an intermediate panel portion 116 and an end panel portion 118. The inner panel portion 114 and the intermediate panel portion 116 extend generally laterally outwardly from the frame 16 towards the side surface 17 of the seat back 14.

As shown in Figs. 11 and 12, the intermediate panel portion 116 and the end panel portion 118 angle so that a top edge 122 of the arm 112 is located closer to the inflator 44 than a bottom edge 120 of the arm 112. Thus, the arm 112 is wider at the bottom edge 120 than at the top edge 122. In other words, the strap 58 extends along the arm 112 from the portion where the clip 60 is attached to the frame 16, in a direction inclined with respect to the plumb line. By using the support bracket 110 thus formed, the strap 58 extends perpendicularly to the axis of the inflator (the air bag module), that is, parallel to the direction of deployment of the air bag near the portion where the strap 58 is coupled to the frame 16, and extends generally horizontally on the side surfaces of the seat. Thus, as is the case with the embodiment shown in Fig. 7, the direction perpendicular to the axis of the inflator, that is, the direction of deployment of the air bag forms an acute angle with the path of the strap 58 in the fore-to-aft direction of the seat with respect to the height direction of the seat when viewed from the side surface. By using the support bracket 110, the strap 58 extends from the portion where it is coupled to the frame 16 to the seam line 32 without being twisted. This enables the deployment pressure of the air bag to be transmitted to the seam line with certainty. At the moment of deployment of the air bag, the strap 58 substantially uniformly contacts the arm 112 without unilaterally touching the top or bottom edge of the arm 112, whereby the deployment pressure of the air bag can be transmitted to the seam line with certainty.

The support brackets 40, 70 and 110 of the embodiment and of the first and second comparative examples also serve as a protector encompassing the air bag module 38. If an object has flung into the passenger seat in case of a side collision of the vehicle, the protector encompassing the air bag module protects the air bag module from the object. Thus, the first through third embodiments can provide the aforementioned effect without substantially increasing the number of parts in comparison with the conventional structure.

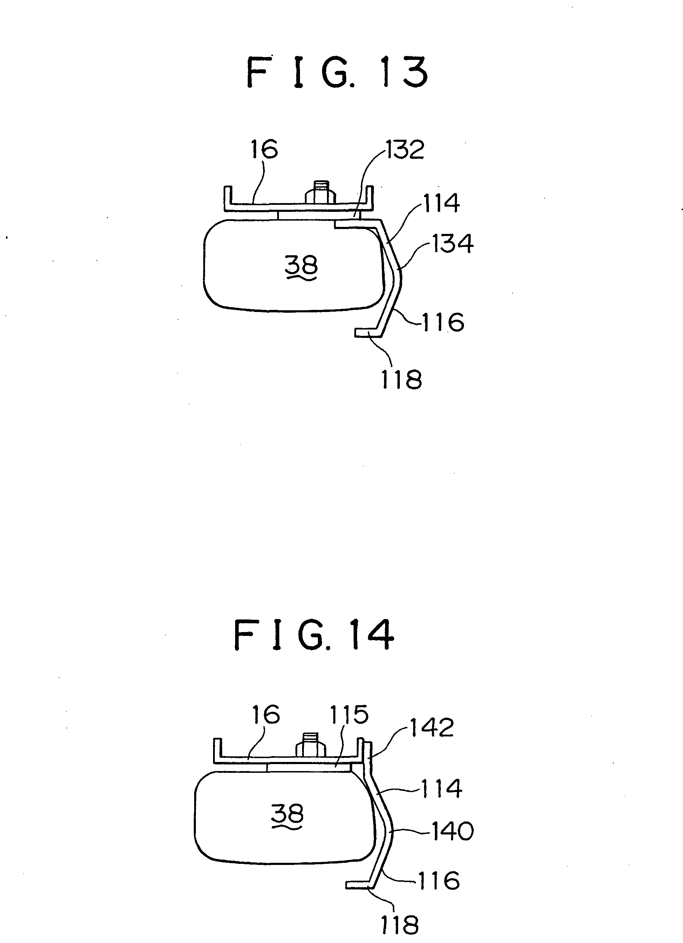

The support brackets 40, 70 and 110 of the embodiment and of the first and second comparative examples may be formed in two pieces, a mounting portion 132 and an arm 134 which are welded together as is apparent from a support bracket 134 shown in Fig. 13.

The support brackets 40, 70 and 110 may be composed of separate parts, a support bracket 115 shown in Fig. 14 and an arm 140 having at its inner end a flange 142 to be mounted directly to the back of the frame 16.

While the present invention has been described with reference to what are presently considered to be a preferred embodiment and comparative examples thereof, it is to be understood that the present invention is not limited to the disclosed embodiment or constructions. On the contrary, the present invention is intended to cover various modifications.

## Claims

1. A vehicle seat comprising:
an air bag deployment apparatus with a seat back (14) having a frame (16), a cushion (18) extending about the frame (16) to form a cavity (42) and a trim cover (20) extending over the cushion (18) and having a frangible seam line (32), and with an air bag module (38) mounted to the frame (16) within the cavity (42), the air bag deployment apparatus comprising:
a support member (40, 70, 110, 134, 140) mounted to the frame (16) and having an arm (55; 74; 112) extending from the frame (16) towards a side portion of the seat back (14) to form a reaction surface (52, 76) on one side; and
a strap (58, 72) mounted to the frame (16) and extending rearwardly of the reaction surface (52, 76) towards the side portion of the seat back (14), one end of the strap (58, 72) being attached to the frame (16) and the other end being attached to the trim cover (20) at the seam line (32), the cushion (18) has a rear portion (30) extending rearwardly of the air bag module (38),
**wherein**
a part of the rear portion (30) is sandwiched between the reaction surface (76) and the strap (72), and the sandwiched part of the rear portion (30) has a uniform thickness from top to bottom of the strap (72).

2. The vehicle seat according to claim 1, **characterized in that** the air bag module (38) is mounted to the frame through the support member (40, 70, 110).

3. The vehicle seat according to claim 1 or 2, **characterized in that** the support member (40, 70, 110, 134, 140) has an end portion (56, 86, 118) extending towards a front portion of the seat from the reaction surface.

4. The vehicle seat according to one of claims 1 to 3, **characterized in that** at least a part of the strap (58, 72) extends between the trim cover (20) and the cushion (18).

5. The vehicle seat according to one of claims 1 to 4, **characterized in that** the support member (40, 70, 110, 134, 140) is a protector for protecting the air bag module (38) from an impacting object outside a vehicle.

## Patentansprüche

1. Fahrzeugsitz mit:
einer Airbagentwicklungsvorrichtung mit einer Sitzlehne (14), die einen Rahmen (16), einen Polster (18), der sich über den Rahmen (16) erstreckt, um eine Höhlung (42) auszubilden, und einen Bezug (20), der sich über den Polster (18) erstreckt, und eine zerreißbare Nahtlinie (32) aufweist, und mit einem Airbagmodul (38), das an dem Rahmen (16) innerhalb der Höhlung (42) montiert ist, wobei die Airbagentwickelungsvorrichtung umfasst:
ein Stützelement (40, 70, 110, 134, 140) das an den Rahmen (16) montiert ist und einen Arm (55; 74; 112) aufweist, der sich von dem Rahmen (16) zu einem Seitenabschnitt der Sitzlehne (14) erstreckt, um eine Reaktionsfläche (52, 76) an einer Seite auszubilden; und
einen Gurt (58, 72), der an den Rahmen (16) montiert ist und sich in einen Bereich rückwärts der Reaktionsfläche (52, 76) zu dem Seitenabschnitt der Sitzlehne (14) erstreckt, wobei ein Ende des Gurts (58, 72) an dem Rahmen (16) angebracht ist, und das andere Ende an der Hülle (20) an der Nahtlinie (32) angebracht ist, wobei der Polster (18) einen rückwärtigen Abschnitt (30) aufweist, der sich rückwärts des Airbagmoduls (38) erstreckt,
wobei
ein Teil des Rückabschnitts (30) zwischen die Reaktionsfläche (76) und den Gurt (72) eingefügt ist, und das eingefügte Teil des rückwärtigen Abschnitts (30) von dem oberen Bereich zu dem unteren Bereich des Gurts (72) eine gleichförmige Dicke aufweist.

2. Fahrzeugsitz nach Anspruch 1, **dadurch gekennzeichnet, dass** das Airbagmodul (38) durch das Stützelement (40, 70, 110) an den Rahmen montiert ist.

3. Fahrzeugsitz nach Anspruch 1 oder 2, **dadurch gekennzeichnet, dass** das Stützelement (40, 70, 110, 134, 140) einen Endabschnitt (56, 86, 118) aufweist, der sich seinem vorderen Abschnitt des Sitzes von der Reaktionsfläche erstreckt.

4. Fahrzeugsitz nach einem der Ansprüche 1 bis 3, **dadurch gekennzeichnet, dass** zumindest ein Teil des Gurts (58, 72) sich zwischen dem Bezug (20) und dem Polster (18) erstreckt.

5. Fahrzeugsitz nach einem der Ansprüche 1 bis 4, **dadurch gekennzeichnet, dass** das Stützelement (40, 70, 110, 134, 140) ein Protektor zum Schützen des Airbagmoduls (38) von einem außerhalb eines Fahrzeugs aufprallenden Gegenstand ist.

## Revendications

1. Siège de véhicule comprenant :
un appareil de déploiement de coussin de sécurité gonflable avec un dossier (14) ayant un châssis (16), un coussin (18) s'étendant autour du châssis (16) afin de former une cavité (42) et un revêtement d'habillage (20) s'étendant sur le coussin (18) et ayant une ligne de couture fragile (32) et avec un module de coussin de sécurité gonflable (38) monté sur le châssis (16) à l'intérieur de la cavité (42), l'appareil de déploiement de coussin de sécurité gonflable comprenant :
un élément de support (40, 70, 110, 134, 140) monté sur le châssis (16) et ayant un bras (55 ; 74 ; 112) s'étendant à partir du châssis (16) vers une partie latérale du dossier (14) afin de former une surface de réaction (52, 76) sur un côté ; et
une sangle (58, 72) montée sur le châssis (16) et s'étendant vers l'arrière de la surface de réaction (52, 76) vers la partie latérale du dossier (14), une extrémité de la sangle (58, 72) étant fixée sur le châssis (16) et l'autre extrémité étant fixée sur le revêtement d'habillage (20) au niveau de la ligne de couture (32), le coussin (18) a une partie arrière (30) s'étendant vers l'arrière du module de coussin de sécurité gonflable (38),
dans lequel
une partie de la partie arrière (30) est prise en sandwich entre la surface de réaction (76) et la sangle (72) et la partie prise en sandwich de la partie arrière (30) a une épaisseur uniforme de haut en bas de la sangle (72).

2. Siège de véhicule selon la revendication 1, **caractérisé en ce que** le module de coussin de sécurité gonflable (38) est monté sur le châssis à travers l'élément de support (40, 70, 110).

3. Siège de véhicule selon la revendication 1 ou 2, **caractérisé en ce que** l'élément de support (40, 70, 110, 134, 140) a une partie d'extrémité (56, 86, 118) s'étendant vers une partie avant du siège à partir de la surface de réaction.

4. Siège de véhicule selon l'une des revendications 1 à 3, **caractérisé en ce qu'**au moins une partie de la sangle (58, 72) s'étend entre le revêtement d'habillage (20) et le coussin (18).

5. Siège de véhicule selon l'une des revendications 1 à 4, **caractérisé en ce que** l'élément de support (40, 70, 110, 134, 140) est un dispositif de protection pour protéger le module de coussin de sécurité gonflable (38) à partir d'un objet d'impact à l'extérieur d'un véhicule.
